# EUROPÄISCHE PATENTSCHRIFT

(11) **EP 0 547 022 B1**
(45) Veröffentlichungstag und Bekanntmachung des Hinweises auf die Patenterteilung: **01.07.1998**
(21) Anmeldenummer: 92890258.4
(22) Anmeldetag: 09.12.1992
(51) Int. Cl.: F15B 5/00, F16K 31/00

(54) **Piezo-Ventil**
Piezo-electric valve
Vanne pièzo-électrique

(30) Priorität: 11.12.1991 AT 2464/91
(43) Veröffentlichungstag der Anmeldung: 16.06.1993
(73) Patentinhaber: HYGRAMA AG, CH-6343 Rotkreuz (CH)
(72) Erfinder: Frisch, Herbert, A-1238 Wien (AT)
(74) Vertreter: Klein, Adam, Dipl.Ing.

(56) Entgegenhaltungen:
- DE-A- 3 608 550
- PATENT ABSTRACTS OF JAPAN vol. 014, no. 388 (M-1014)22. August 1990 & JP-A-2 146 380 ( YUKINORI ) 5. June 1990

## Beschreibung

Die Erfindung betrifft ein Piezo-Ventil mit einem piezoelektrischen Biegeelement, welches einen entsprechend einer angelegten Steuerspannung gegen eine über eine separate äußere Belastungsanordnung elastisch aufgebrachte Gegenkraft beweglichen Steuerbereich aufweist.

Derartige Ventile, die entsprechend ihrer häufigsten Anwendung oft auch als elektropneumatische Wandler bezeichnet werden, sind bekannt und weisen als Stellelement ein piezoelektrisches, zumeist piezokeramisches, Biegeelement auf, welches einseitig eingespannt ist. Mit dem der Einspannung gegenüberliegenden beweglichen Steuerbereich liegt das Biegeelement beispielsweise in der spannungslosen Schaltstellung vorgespannt gegen einen Zuluftsitz an, wodurch dieser druckdicht verschlossen ist. Beim Anlegen der Steuerspannung wird das Biegeelement sodann gegen die Vorspann-Gegenkraft vom Zuluftsitz abgehoben, wodurch dieser zum Durchlaß des Mediums geöffnet wird. Bekannt sind weiters auch Anordnungen, bei welchen nach dem gleichen Prinzip eine Umschaltung zwischen Zulauf- und Ablaufsitz stattfindet, bzw. bei welchen durch die Stellung des Steuerbereiches des Biegeelementes eine wählbare Aufteilung eines Mediumstromes erfolgt.

Die Biegewandler bzw. Biegeelemente derartiger Ventile haben wegen der Eigenschaften der piezoelektrischen Materialien den Nachteil, daß sie bei länger dauernder mechanischer und/oder elektrischer Beaufschlagung ihre Ruheform verändern. Die entsprechende Eigenschaft wird auch als Relaxation bezeichnet, wobei zwischen zwei Grundtypen unterschieden wird. Die bei mechanischer Belastung über längere Zeit auftretende Formveränderung wird als mechanische Relaxation bezeichnet - diese ist gegen die Richtung der Vorspannkraft gerichtet. Gemäß DE 3,608.550 A1 wird bei einer Anordnung der eingangs genannten Art die Gegenkraft über eine separate äußere Belastungsanordnung auf das piezoelektrische Biegeelement aufgebracht. Damit wird im wesentlichen erreicht, daß die Auswirkung der mechanischen Relaxation im Biegeelement unterbunden ist.

Die beim Anlegen einer elektrischen Steuerspannung über längere Zeit auftretende und als Zunahme der Verbiegung feststellbare Formänderung wird als elektrische Relaxation bezeichnet - diese ist in Richtung der elektrischen Verbiegung wirksam und an sich grundsätzlich deutlicher in Erscheinung tretend. Sowohl die mechanische als auch die elektrische Relaxation sind bekanntermaßen nur zum Teil reversibel und verändern insgesamt in unerwünschtem Maß die justierte Lage des Biegeelementes, was beispielsweise dazu führen kann, daß nach längerer Spannungsbeaufschlagung des Biegeelementes der Steuerbereich desselben auch nach dem Abschalten der Steuerspannung nicht mehr in die andere Schaltstellung zurückkehrt, womit beispielsweise der der Ruhestellung zugeordnete Sitz des Ventils nicht mehr geschlossen werden kann.

Aufgabe der vorliegenden Erfindung ist es, ein Piezo-Ventil der eingangs genannten Art so zu verbessern, daß die zufolge der elektrischen und mechanischen Relaxation auftretenden beschriebenen Nachteile vermieden werden und daß insbesonders sichergestellt werden kann, daß das Biegeelement auch nach länger dauernden Schaltzyklen zuverlässig arbeitet.

Dies wird gemäß der vorliegenden Erfindung bei einem Piezo-Ventil der eingangs genannten Art dadurch erreicht, daß das Biegeelement selbst mittels seiner Einspannung elastisch gegen die Wirkung der Gegenkraft vorgespannt ist. Damit ist auf einfache Weise erreicht, daß die Wirkungsrichtungen der mechanischen Relaxation einerseits und der elektrischen Relaxation andererseits entgegengerichtet sind, sodaß im praktischen Betrieb eines derartigen Piezo-Ventils auch nicht die bei den bisher bekannten Anordnungen unvermeidbare Addition der unerwünschten Einflüsse der elektrischen und der mechanischen Relaxation eintritt.

Im zuletzt genannten Zusammenhang besonders vorteilhaft ist eine weitere Ausgestaltung der Erfindung, gemäß welcher die Vorspannung des Biegeelements gegen die Gegenkraft so groß ist, daß sich die unter der Wirkung der Steuerspannung bzw. der dadurch verursachten Auslenkung des Biegeelementes auftretende elektrische und mechanische Relaxation zumindest teilweise kompensieren. Damit kann zumindest für bevorzugte Betriebszustände bzw. Schaltstellungen des Piezo-Ventils eine äußerst vorteilhafte Ausschaltung bzw. gegenseitige Kompensation der beiden genannten Relaxationsarten erreicht werden, sodaß auch bei über lange Zeiten zu haltenden Schaltstellungen keine Dejustierung des Biegeelementes und damit einhergehende Funktionsbeeinträchtigung des Piezo-Ventils insgesamt auftreten kann.

Das Biegeelement kann in weiterer Ausgestaltung der Erfindung in seiner einen Schaltstellung unter der Wirkung einer im Steuerbereich angreifenden Feder, vorzugsweise Spiraldruckfeder, gegen einen Zuluftsitz abdichtend anliegen und mit einer Vorspannkraft kleiner als die Differenz von Federvorspannkraft und Zuluftdruckkraft gegen die Wirkung der Feder vorgespannt sein, womit sich eine Ausführung ergibt, die einerseits in der einen Schaltstellung ein sicheres Dichthalten des Zuluftsitzes garantiert und andererseits in beiden Schaltstellungen eine zumindest weitgehende Kompensation der unerwünschten Auswirkungen der elektrischen und mechanischen Relaxation erlaubt.

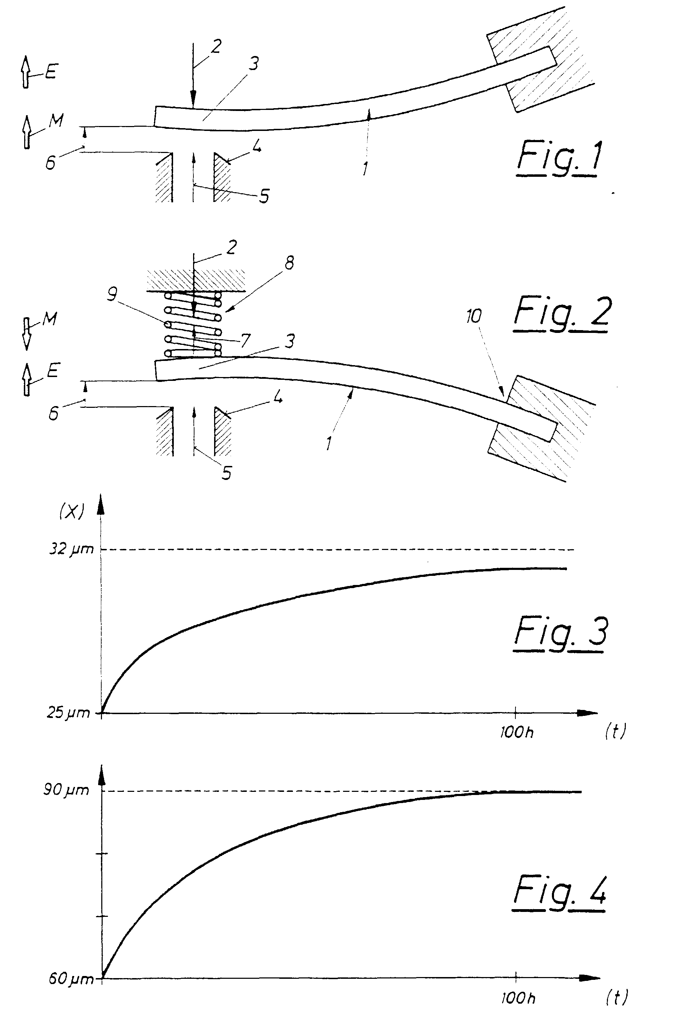

Die Erfindung wird im folgenden noch anhand der schematischen Zeichnungen näher erläutert. Fig. 1 zeigt dabei ein Detail aus einem Piezo-Ventil nach dem Stande der Technik, Fig. 2 ein entsprechendes Detail aus einer erfindungsgemäßen Ausführungsform, Fig. 3 ein Diagramm, in dem die Auslenkung (Weg x) eines piezoelektrischen Biegeelementes gemäß den Fig. 1 oder 2 zufolge mechanischer Relaxation über der Zeit (t) eingetragen ist und Fig. 4 ein entsprechendes Diagramm zur Darstellung der elektrischen Relaxation.

Ein nicht vollständig dargestelltes Piezo-Ventil nach dem Stande der Technik weist gemäß Fig. 1 ein piezoelektrisches Biegeelement 1 auf, welches einen entsprechend einer angelegten Steuerspannung (Anschlüsse nicht dargestellt) gegen eine elastisch aufgebrachte Gegenkraft (Pfeil 2) beweglichen Steuerbereich 3 aufweist. Im hier nicht dargestellten spannungslosen Ruhezustand des Biegeelementes 1 liegt der Steuerbereich 3 unter der Wirkung der Gegenkraft (2) auf einem Zuluftsitz 4 auf und dichtet diesen ab, soferne sichergestellt ist, daß die Gegenkraft (2) größer gleich der zufolge des Zuluftdruckes in Richtung des Pfeiles 5 wirkenden Zuluftdruckkraft ist. Beim Anlegen der Steuerspannung wird der Steuerbereich 3 des piezoelektrischen Biegeelementes 1 gegen die Wirkung der Gegenkraft (2) in Richtung des Pfeiles 6 vom Zuluftsitz 4 abgehoben.

Die in der abgehobenen Steuerstellung gemäß Fig. 1 auftretende zusätzliche mechanische Relaxation des Biegeelementes 1 ist mit dem Pfeil M in ihrer Richtung angedeutet - die elektrische Relaxation ist durch den Pfeil E charakterisiert. Beide wirken bei dieser bekannten Anordnung nach dem Stande der Technik in gleiche Richtung - weg vom Zuluftsitz 4 - was dazu führt, daß bei länger andauernd abgehobener Schaltstellung der Steuerbereich 3 auch nach dem Abschalten der Steuerspannung zufolge bleibender Verformung nicht mehr in die abdichtende untere Steuerstellung zurückkehrt.

Bei dem Beispiel der erfindungsgemäßen Anordnung nach Fig. 2 wird die Gegenkraft (Pfeil 2) über eine separate äußere Belastungsanordnung aufgebracht, die hier von einer im Steuerbereich 3 angreifenden Feder 8, beispielsweise einer Spiraldruckfeder, gebildet ist. Weiters ist hier nun das Biegeelement 1 selbst mittels seiner Einspannung 10 elastisch gegen die Wirkung der Gegenkraft (2) vorgespannt, was durch den Pfeil 7 symbolisiert ist. Die Vorspannung (7) des Biegeelementes 1 gegen die Gegenkraft (2) ist so groß gewählt, daß sich die unter der Wirkung der Steuerspannung bzw. der dadurch verursachten Auslenkung (Pfeil 6) des Biegeelementes 1 auftretende elektrische Relaxation (Pfeil E) und mechanische Relaxation (Pfeil M) zumindest teilweise kompensieren. Damit können die zu Fig. 1 beschriebenen, insbesonders bei länger dauernder Spannungsbeaufschlagung des Biegeelementes 1 auftretenden Nachteile sicher vermieden werden.

Aus der die mechanische Relaxation deutlich machenden Fig. 3 ist zu ersehen, daß bei einem konkreten piezoelektrischen Biegeelement im Test nach konstanter Belastung mit 4 g anfänglich eine Auslenkung (x) von 25 µm festgestellt wurde. Im Langzeitversuch zeigt sich dann eine asymptotische Kurve einer weiteren Auslenkung, welche sich jenseits einer Belastungsdauer (t) von 100 Stunden bei einer endgültigen Auslenkung von 32 µm stabilisiert, wobei die zufolge der mechanischen Relaxation aufgetretene zusätzliche Auslenkung von 7 µm nach Wegnahme der Belastung nur mehr geringfügig zurückgeht bzw. zum größten Teil bleibend ist.

Aus Fig. 4 ist die Auswirkung der elektrischen Relaxation am gleichen Biegeelement wie in Fig. 3 angedeutet. Bei Anlegen einer konstanten Spannung von 24 V Gleichstrom erfolgt eine anfängliche Auslenkung (x) von 60 µm, welche jenseits einer Dauer (t) von 100 Stunden asymptotisch auf etwa 90 µm ansteigt, wobei auch hier die zusätzliche, zufolge der elektrischen Relaxation auftretende Auslenkung von 30 µm nach Wegnahme der Spannung nur mehr zu einem geringen Teil zurückgeht.

Im Vergleich von Fig. 3 und 4 ist zu ersehen, daß - bezogen auf die gleiche Belastungsdauer - die elektrische Relaxation um etwa einen Faktor 4 größer ist als die mechanische Relaxation, was natürlich zusammen mit den sonstigen konstruktiven Parametern einer tatsächlichen Ausführung des Piezo-Ventils nach der vorliegenden Erfindung für die Erzielung der beabsichtigten zumindest teilweisen Kompensation der elektrischen und mechanischen Relaxation zu berücksichtigen ist.

## Patentansprüche

1. Piezo-Ventil mit einem piezoelektrischen Biegeelement (1), welches einen entsprechend einer angelegten Steuerspannung gegen eine über eine separate äußere Belastungsanordnung (8) elastisch aufgebrachte Gegenkraft (2) beweglichen Steuerbereich aufweist, **dadurch gekennzeichnet,** daß das Biegeelement (1) selbst mittels seiner Einspannung (10) elastisch gegen die Wirkung der Gegenkraft (2) vorgespannt ist.

2. Piezo-Ventil nach Anspruch 1, dadurch gekennzeichnet, daß die Vorspannung (7) des Biegeelements (1) gegen die Gegenkraft (2) so groß ist, daß sich die unter der Wirkung der Steuerspannung bzw. der dadurch verursachten Auslenkung (6) des Biegeelementes (1) auftretende elektrische und mechanische Relaxation (E, M) zumindest teilweise kompensieren.

3. Piezo-Ventil nach Anspruch 1 oder 2, wobei das Biegeelement (1) in seiner einen Schaltstellung unter der Wirkung einer im Steuerbereich (3) angreifenden Feder (9), vorzugsweise Spiraldruckfeder, gegen einen Zuluftsitz (4) abdichtend anliegt, dadurch gekennzeichnet, daß das Biegeelement (1) mit einer Vorspannkraft (7) kleiner als die Differenz von Federvorspannkraft (2) und Zuluftdruckkraft (5) gegen die Wirkung der Feder (8) vorgespannt ist.

## Claims

1. A piezo-electric valve with a piezo-electric bending element (1) which has a control region movable in accordance with an applied control voltage against a counter force (2) exerted resiliently by way of a separate external loading arrangement (8), **characterized in that** the bending element (1) is itself resiliently pre-stressed against the action of the counter force (2) by means of its clamping (10).

2. A piezo-electric valve according to Claim 1, **characterized in that** the pre-stressing (7) of the bending element (1) against the counter force (2) is so great that the electrical and mechanical relaxation (E, M) arising under the action of the control voltage or the deflexion (6) of the bending element (1) caused thereby is compensated at least in part.

3. A piezo-electric valve according to Claim 1 or 2, in which the bending element (1) rests in a sealed manner against an air-supply seating (4) in one of its shifting positions under the action of a spring (9), preferably a helical compression spring, engaging in the control region (3), **characterized in that** the bending element (1) is pre-stressed against the action of the spring (8) with a pre-stressing force (7) smaller than the difference of the spring pre-stressing force (2) and the air-supply pressing force (5).

## Revendications

1. Vanne piézo-électrique comportant un élément flexible piézo-électrique (1) qui présente une zone de commande mobile, en fonction d'une tension électrique de commande appliquée, à l'encontre d'une contre-force (2) exercée élastiquement par l'intermédiaire d'un dispositif de contrainte extérieur distinct (8), caractérisée par le fait que l'élément flexible (1) est lui-même précontraint élastiquement, au moyen de son encastrement (10), à l'encontre de l'action de la contre-force (2).

2. Vanne piézo-électrique selon la revendication 1, caractérisée par le fait que la précontrainte (7) de l'élément flexible (1) à l'encontre de la contre-force (2) est suffisamment importante pour que la relaxation électrique et mécanique (E, M) qui apparaissent sous l'action de la tension électrique de commande ou de la déviation (6), provoquée de ce fait, de l'élément flexible (1) se compensent au moins partiellement.

3. Vanne piézo-électrique selon la revendication 1 ou 2, dans le cas de laquelle l'élément flexible (1), dans sa première position de commutation, s'appuie de façon étanche contre un siège (4) d'arrivée d'air sous l'action d'un ressort (9), de préférence un ressort de compression spiral, qui intervient dans la zone de commande (3), caractérisée par le fait que l'élément flexible (1) est précontraint, à l'encontre de l'action du ressort (8), avec une force de précontrainte (7) inférieure à la différence entre la force (2) de précontrainte du ressort et la force (5) de pression de l'air qui arrive.
